# FASCICULE DE BREVET EUROPEEN

(11) **EP 0 729 857 B1**
(45) Date de publication et mention de la délivrance du brevet: **17.03.1999**
(21) Numéro de dépôt: 96400211.7
(22) Date de dépôt: 31.01.1996
(51) Int. Cl.: B60J 10/02

(54) **Vitrage, en particulier pour véhicules automobiles, préparé pour être monté par collage**
Glasscheibe, insbesondere für Kraftfahrzeuge, prepariert zum Montieren durch Klebung
Glazing, in particular for vehicles, prepared for mounting by glueing

(30) Priorité: 02.02.1995 DE 19503314
(43) Date de publication de la demande: 04.09.1996
(73) Titulaire: SAINT-GOBAIN VITRAGE, 92400 Courbevoie (FR)
(72) Inventeur: Cornils, Gerd, D-52399 Merzenich 3 (DE); Kötte, Rolf, Dr., D-52477 Alsdorf-Begau (DE); Friede, Petra, D-52393 Hürtgenwald-Horm (DE)
(74) Mandataire: Muller, René

(56) Documents cités:
- EP-A- 0 312 496
- EP-A- 0 379 908
- EP-A- 0 521 825
- EP-A- 0 620 134
- DE-A- 1 801 148
- FR-A- 2 520 428

## Description

L'invention a trait à un vitrage, destiné en particulier aux véhicules automobiles, préparé pour être monté par collage et pourvu à cet effet d'un profilé d'encadrement en élastomère, ce profilé présentant une structure, qui, en coupe, a la forme d'un U, est conçu pour recevoir le cordon d'adhésif de montage et il est ouvert en direction du rebord de fixation du cadre de la baie, les ailes latérales de cette structure en U étant dotées de saillies de retenue pour le cordon d'adhésif et la jonction entre le profilé d'encadrement et le cordon d'adhésif durci étant assurée par emboîtement mécanique, entre les saillies de retenue et la masse adhésive durcie.

Un vitrage d'automobile de ce type, préparé pour être monté par collage, est décrit dans la demande de brevet EP-A-0 620 134. Pour ce vitrage d'automobile déjà connu, la structure du cadre en forme de U est façonnée, en coupe, de façon que la gorge de la partie en U du profilé présente, dans sa section, une forme de sapin, la gorge se rétrécissant en effet du fond de la gorge vers son ouverture.

Des vitrages prééquipés du type précédent possèdent une caractéristique des plus utiles. Il est en effet possible, après l'installation, de les démonter facilement en tirant dessus, sans que le cordon d'adhésif doive en être endommagé, comme c'est généralement le cas pour les autres vitrages collées. Les ailes latérales du profilé en forme de U s'écartent ici sous l'effort de pression mécanique et se détachent facilement du cordon de pose durci.

Le vitrage une fois démonté pourra ainsi être réutilisé, ce qui représente un avantage considérable lors du processus de fabrication des véhicules automobiles, lorsque, par exemple, sur la carrosserie, il faut refaire la peinture aux environs du cadre d'une fenêtre, le vitrage correspondant devant alors être démonté.

Néanmoins, dans ce cas précis, il faut, avant de réinstaller le vitrage, commencer par ôter, au moyen d'un outil mécanique de découpe, le cordon d'adhésif durci, qui adhère au rebord du cadre de fenêtre, puis déposer un nouveau cordon d'adhésif de pose à l'intérieur de la gorge du profilé en forme de U, à la périphérie du vitrage avant de le remonter. Ensuite il ne faut pas que le vitrage ait, immédiatement après son installation, à supporter le moindre effort, au contraire, il est recommandé de lui éviter toute contrainte mécanique pendant la période de durcissement de la nouvelle masse adhésive, ce qui constitue une servitude importante.

L'invention a pour objet de perfectionner un vitrage automobile du type précédent, de façon que la réinstallation en soit facilitée après le premier démontage et que le temps d'attente, indispensable pour le vitrage posé acquière sa résistance maximale après réinstallation, puisse être considérablement réduit.

Cet objectif peut être atteint, selon l'invention, lorsque le vitrage, destiné à subir montage et démontage dans une baie, notamment un vitrage automobile, équipé d'un cadre périphérique en élastomère comportant une gorge destinée à recevoir un cordon adhésif de pose qui adhère sur le rebord de la baie et qui durcit après mise en place du vitrage, ladite gorge possédant au moins une saillie afin de retenir le cordon adhésif et la liaison entre le cadre en élastomère et le cordon adhésif étant assurée par emboîtement mécanique le matériau du cordon adhésif n'adhèrant pas à celui du cadre périphérique (Vitrage du type divulgué dans EP-A-0 620 134), caractérisé en ce que la gorge est évasée et en ce que les matières du cadre périphérique et du cordon de pose sont telles qu'après durcissement du cordon de pose, il peut être extrait de la gorge sans détérioration. On réalise le mode préféré de l'invention lorsque la gorge du cadre comporte au moins une saillie voisine de son embouchure. De préférence, la profondeur de la gorge en dessous de la saillie est supérieure à l'épaisseur de la saillie. De même avantageusement, le cadre périphérique comporte au moins une cavité au voisinage du fond de la gorge.

Ainsi, la structure transversale du profilé conçu pour recevoir l'adhésif de montage est géométriquement étudiée, en conformité avec l'invention, de façon qu'en respectant l'élasticité du profilé en polymère, c'est-à-dire la souplesse élastique des ailes latérales du profilé en U et de leurs saillies de retenue, le vitrage équipé de son cadre profilé puisse non seulement être détaché du cordon d'adhésif durci, mais qu'ensuite, il puisse également être refixé sur le même cordon d'adhésif de montage déja en place, en le réemboîtant comme auparavant, par une pression mécanique.

De cette façon, la réinstallation du vitrage peut s'effectuer en un très court laps de temps, la jonction possédant sa résistance d'origine dès que le vitrage est réinstallé, si bien que toute manipulation nécessaire ou tout autre effort peut se produire immédiatement après.

La géométrie de la structure transversale du cadre peut bien entendu connaître de grandes variations. Elle s'adapte aux propriétés élastiques du polymère utilisé, ainsi qu'en fonction des dimensions du cadre profilé que l'on emploie. Dans certains cas précis, il peut falloir plusieurs essais pour obtenir une structure transversale favorable. Il en est de même pour la géométrie, les dimensions et le nombre des saillies de retenue. Le cas échéant, il peut suffire de créer une seule saillie de retenue, cependant, pour des raisons de symétrie, il est préférable de pourvoir les deux ailes latérales du profilé en U d'une ou même de plusieurs de ces saillies.

D'autres caractéristiques et avantages de cette invention figurent dans les revendications de brevet, ainsi que dans la description ci-dessous de différents modèles, également représentés sur les croquis.

Les illustrations en coupe présentent :
**figure 1** : un cadre conforme à l'invention et pourvu d'une saillie de retenue sur l'une des ailes du profilé en U,
**figure 2** : un cadre conforme à l'invention et pourvu sur chacune des deux ailes du profilé en U d'une saillie de retenue, et enfin
**figure 3** : un autre modèle de cadre conforme à l'invention.

Il est nécessaire, pour le bon fonctionnement du système de montage conforme à l'invention, que les deux parties de la jonction, à savoir, d'une part, le profilé en U doté des saillies de retenue et, d'autre part, la masse d'adhésif utilisée lors du montage du vitrage n'adhèrent pas l'une à l'autre, mais que la fixation du vitrage dans le cadre de fenêtre de la carosserie ne se fasse que par la retenue mécanique du cordon d'adhésif durci à l'intérieur du profilé avec sa gorge et ses saillies. Cela suppose qu'un matériau qui n'adhère pas à celui du profilé soit utilisé comme masse adhésive lors du montage. La demande de brevet EP-A-0 620 134 fait mention de matériaux adaptés à cet usage. D'autre part, on peut employer, pour le profilé d'encadrement, un élastomère de polyoléfine thermoplastique à base de polypropyléne isotactique et de caoutchouc éthylène-propylène-diène, comme par exemple le Santoprène produit par la société Advanced Elastomer Systems, tandis que le matériau utilisé comme adhésif de montage peut être fait d'un système de polyuréthane monocomposant durcissant au contact de l'humidité, comme par exemple le Bétaseal de la société Gurit-Essex. Ces deux matériaux réalisent en effet des conditions particulièrement favorables, en raison de leurs propriétés élastiques et d'anti-adhésion.

Dans les exemples suivants, à chaque fois, c'est le cadre profilé dont la section a la forme d'un U qui est placé sur le vitrage. Cependant, le principe de l'invention peut aussi être mis en oeuvre de façon qu'à l'inverse, le cadre profilé, dont la structure transversale est en U, soit située sur le rebord de fixation, tandis que la masse adhésive de montage adhère, elle, au vitrage. Cependant, on préfère en général, pour des raisons techniques, doter le vitrage du profilé en U. Et, c'est le plus souvent dans l'atelier de fabrication ou de conditionnement du vitrage que le dépôt du cadre est réalisé.

De même, le procédé de fabrication du cadre profilé n'a guère d'importance en ce qui concerne le bon fonctionnement du système de pose de vitrage conforme à l'invention. Ainsi, dans le cas où le profilé à gorge est d'abord posé sur le rebord de fixation de la carosserie d'automobile, on peut simplement coller un cadre préfabriqué en un élastomère approprié et qui possède la section en U de l'invention, sur le rebord de fixation et alors, le cordon d'adhésif de pose peut être extrudé sur ce même rebord à l'intérieur du U, à l'aide d'un dispositif d'extrusion adapté. L'adhésion du vitrage au cordon adhésif s'effectue alors dans l'atelier de pose du vitrage. Si, en revanche, le cadre profilé doit être fixé au vitrage, on pourra le fabriquer au préalable, puis le coller sur le vitrage, ou bien l'extruder sur ce dernier. Mais il est également possible de fabriquer le cadre profilé sur le vitrage au moyen d'une technique d'encapsulation, de moulage par injection ou bien par le procédé RIM (Reaction Injection Moulding). Notons que tous ces procédés font partie des techniques actuellement bien connues.

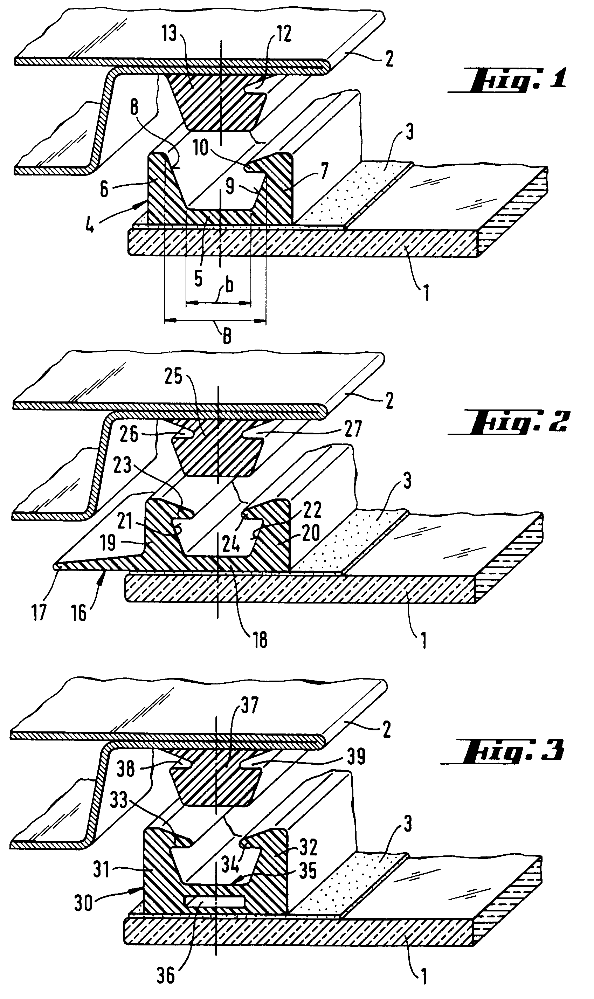

La **figure 1** présente un premier type d'association cadre en élastomère-mastic de pose conforme à l'invention. Cette représentation est une vue en coupe de la région périphérique du vitrage automobile 1, ainsi que du rebord de fixation 2 du cadre de la baie d'une carosserie, sur lequel le vitrage 1 doit être fixé par collage.

Le vitrage 1 est représenté dans ce cas sous sa forme monolithique, c'est à dire en tant que vitre de verre de sécurité trempé. Mais il peut bien entendu s'agir également d'un vitrage à plusieurs composants tel qu'en verre feuilleté. Dans la région du bord se trouvant face au rebord de fixation 2, le vitrage 1 est pourvu d'un revêtement 3, de la forme du cadre et fait d'un émail coloré cuit au four. Après une préparation appropriée du revêtement 3 au moyen de promoteurs d'adhérence adaptés, le cadre profilé 4 en élastomère est fortement collé au revêtement-cadre 3.

La fabrication du cadre profilé 4 peut par exemple s'effectuer au moyen d'un procédé d'extrusion, un élastomère thermoplastique approprié étant extrudé sur la vitre 1. Ce procédé, ainsi qu'un dispositif adapté à son exécution, sont décrits dans la demande de brevet EP-A-0 620 134, mentionnée plus haut.

Le cadre profilé 4 possède, pour l'essentiel, en ce qui concerne le modèle présenté ici, une structure transversale équipée d'une gorge en forme de U composée de la base 5 et des deux ailes latérales 6 et 7. La gorge est évasée, c'est-à-dire que la face interne 8 de l'aile latérale 6 et la face interne 9 de l'aile latérale 7 sont inclinées vers l'extérieur, afin que la largeur b de la base 5 soit nettement inférieure à l'espace B séparant les extrêmités supérieures des ailes latérales 6 et 7 à l'endroit où elles sont le plus écartées. Une saillie de retenue 10 orientée vers l'intérieur, c'est-à-dire vers la cavité en forme de canal du profilé, est placée sur le bord de l'aile latérale 7.

Afin d'obtenir le montage par collage, on injecte sous forme de pâte, dans la cavité-canal du cadre profilé 4, le cordon d'adhésif par lequel le vitrage doit être relié au rebord de la baie 2.

Après que la cavité en forme de canal est remplie par la masse adhésive, le vitrage 1 est appliqué sur le rebord de fixation de la baie 2. Ainsi, cette masse se répand dans la cavité-canal du cadre profilé 4 et la remplit entièrement et adhère en même temps au rebord 2 du cadre de fenêtre, aucune adhérence ne se produisant cependant entre la masse adhésive et le cadre profilé 4. Après le durcissement de la masse, la jonction est obtenue exclusivement par l'emboîtement mécanique de la saillie de retenue 10 dans le renfoncement 12 correspondant, situé dans le cordon d'adhésif durci 13.

Dans la situation représentée dans la **figure 1**, on peut extraire le vitrage de sa position d'insertion après le durcissement total du cordon d'adhésif 13. Lors de cette extraction, les matières du cadre périphérique et du cordon de pose ainsi que la forme de la gorge sont telles qu'après durcissement, le cordon de pose a pu être extrait de la gorge sans détérioration. Ce vitrage sera ensuite réinstallé dans cette position par la seule pression mécanique. Comme la structure transversale du cordon d'adhésif durci 13 correspond à la structure transversale interne du cadre profilé 4, le cordon 13 s'insère avec son étroite arête proéminente dans le canal, élargi vers le haut, du cadre profilé 4. La saillie de retenue 4 et/ou l'aile latérale 7 cèdent de manière élastique lors de cette action, jusqu'à ce que le cordon 13 et le cadre profilé 4 aient atteint leurs positions définitives l'un par rapport à l'autre. Dans cette situation, la saillie de retenue 10 rentre dans le renfoncement 12 en forme de rainure, rétablissant la jonction d'origine entre le vitrage et le rebord de fixation de la baie 2. On voit que l'épaisseur de la saillie 10 est plus faible que la profondeur du canal en dessous. Cette caractéristique est importante : elle a pour conséquence que la saillie de la gorge du profilé lié au vitrage (dans la mesure où les deux matériaux ont un module d'élasticité voisin), se déforme plus facilement que la partie du cordon adhésif durci située sous sa rainure 12 (qui correspond exactement à la saillie de la gorge). Il s'ensuit qu'au moment de la séparation des deux élastomères, c'est la saillie10, plus souple qui se déforme élastiquement, ce qui évite que le cordon 13 subisse une déformation permanente et/ou une déchirure, ce qui serait le cas si la saillie était sensiblement plus épaisse.

Pour le modèle représenté dans la **figure 2**, le cadre profilé 16, dont le vitrage 1 est pourvu, possède lui aussi une structure transversale avec une gorge. Dans ce cas, par ailleurs, ce cadre 16 est doté en plus d'un élément de profilé 17 en forme de lèvre, qui dépasse du pourtour du vitrage 1 et qui joue le rôle de lèvre d'étanchéité et de centrage lorsque l'on installe la vitre dans l'ouverture de la baie.

Cette lèvre 17 permet en outre de tenir fixement la vitre 1 dans le cadre de fenêtre pendant la période de durcissement de l'adhésif de montage, si bien qu'il n'est pas nécessaire d'ajouter d'autres accessoires pour immobiliser le vitrage.

Dans ce cas également, la gorge du profilé 16 se compose d'une base 18 et de deux ailes latérales 19 et 20. Leurs faces internes 21 et 22 sont, ici aussi, inclinées de manière que la cavité en forme de canal soit évasée vers le haut. Les ailes latérales 19 et 20 sont l'une comme l'autre pourvues chacune d'une saillie de retenue tournée vers l'intérieur, portant respectivement les numéros 23 et 24. Ces saillies 23 et 24 permettent la jonction mécanique du cadre profilé 16 avec le cordon d'adhésif durci 25, car elles pénètrent dans les renfoncements en forme de rainures, respectivement numérotés 26 et 27.

Les dimensions et la forme géométrique des saillies de retenue 23 et 24, des ailes latérales 19 et 20 du cadre profilé 16, ainsi que les propriétés élastiques des matériaux constitutifs des deux éléments 30, 37 sont ici encore déterminées en fonction les unes des autres afin que, d'une part, la jonction par emboîtement se fasse lors de l'installation du vitrage 1 dans le cadre de fenêtre pourvu du cordon d'adhésif durci 25, que d'autre part la jonction ainsi obtenue présente la résistance souhaitée et que lors de l'extraction du vitrage, aucune déformation permanente ni rupture ne se produise sur aucun des deux éléments associés.

Pour ce qui est du modèle présenté dans la **figure 3,** les ailes latérales 31 et 32 du cadre profilé 30, y compris les saillies 33 et 34, possèdent théoriquement les mêmes dimensions et la même forme géométrique que le modèle pris en exemple dans la **figure 2**. Mais cette fois-ci, la base 35 est pourvue d'une cavité 36. Elle est représentée avec une section rectangulaire, en dessous du fond de la gorge, mais d'autres formes sont possibles. Il s'agit simplement d'accroître la souplesse du cadre lorsque les parois latérales de la gorge 31, 32 s'écartent pour laisser passer le cordon durci 37.

Cette cavité permet en effet que la base 35 cède plus facilement lorsque l'on pousse le cadre profilé 30 contre le cordon d'adhésif durci 37. Il est donc possible de faciliter ainsi l'insertion des saillies de retenue 33 et 34 dans les renfoncements rainurés correspondants (38 et 39).

## Revendications

1. Vitrage (1), destiné à subir montage et démontage dans une baie, notamment vitrage automobile, équipé d'un cadre périphérique (4 ; 16 ; 30) en élastomère comportant une gorge destinée à recevoir un cordon adhésif de pose (13 ; 25 ; 37) qui adhère sur le rebord (2) de la baie et qui durcit après mise en place du vitrage (1), ladite gorge possédant au moins une saillie afin de retenir le cordon adhésif et la liaison entre le cadre en élastomère et le cordon adhésif étant assurée par emboîtement mécanique, le matériau du cordon adhésif (13 ; 25; 37) n'adhèrant pas à celui du cadre périphérique (4 ; 16; 30), caractérisé **en ce que** la gorge est évasée **et en ce que** les matières du cadre périphérique (4 ; 16; 30) ét du cordon de pose (13 ; 25 ; 37) sont telles qu'après durcissement du cordon de pose, il peut être extrait de la gorge sans détérioration.

2. Vitrage selon la revendication 1, **caractérisé en ce que** la gorge du cadre comporte au moins une saillie (10 ; 23, 24 ; 33, 34) voisine de son embouchure.

3. Vitrage selon la revendication 2, **caractérisé en ce que** la profondeur de la gorge en dessous de la saillie est supérieure à l'épaisseur de la saillie (10 ; 23, 24 ; 33, 34).

4. Vitrage selon l'une des revendications précédentes, **caractérisé en ce que** le cadre périphérique (30) comporte au moins une cavité (36) au voisinage du fond (35) de la gorge.

5. Vitrage selon l'une des revendications précédentes, **caractérisé en ce que** le cadre (16) possède une lèvre (17) dépassant du pourtour du vitrage.

6. Vitrage selon l'une des revendications précédentes, **caractérisé en ce que** le cadre périphérique est à base d'un élastomère thermoplastique **et en ce que** le cordon adhésif de pose est à base d'un polymère réactif.

7. Vitrage selon la revendication 6, **caractérisé en ce que** le cadre périphérique est à base de polypropylène isotactique et de caoutchouc éthylène-propylène-diène **et en ce que** le cordon adhésif de pose est à base d'un polyuréthane monocomposant polymérisant à l'humidité.

## Claims

1. Glass panel (1), intended to be mounted in and removed from a window opening, notably a motor vehicle glass panel, equipped with a peripheral frame (4; 16; 30) made from elastomer, having a groove intended to receive an adhesive installation bead (13; 25; 37) which adheres to the rim (2) of the opening and which hardens after fitting of the glass panel (1), the said groove having at least one projection in order to retain the adhesive bead, and the connection between the elastomer frame and adhesive bead being provided by mechanical nesting, the material of the adhesive bead (13; 25; 37) not adhering to that of the peripheral frame (4; 16; 30), characterised in that the groove is splayed and in that the materials of the peripheral frame (4; 16; 30) and installation bead (13; 25; 37) are such that, after hardening of the installation bead, it can be extracted from the groove without damage.

2. Glass panel according to Claim 1, characterised in that the groove in the frame has at least one projection (10; 23, 24; 33, 34) close to its opening.

3. Glass panel according to Claim 2, characterised in that the depth of the groove below the projection is greater than the thickness of the projection (10; 23, 24; 33, 34).

4. Glass panel according to one of the preceding claims, characterised in that the peripheral frame (30) has at least one cavity (36) close to the bottom (35) of the groove.

5. Glass panel according to one of the preceding claims, characterised in that the frame (16) has a lip (17) projecting beyond the periphery of the glass panel.

6. Glass panel according to one of the preceding claims, characterised in that the peripheral frame is based on a thermoplastic elastomer and in that the adhesive installation bead is based on a reactive polymer.

7. Glass panel according to Claim 6 the peripheral frame is based on isotactic polypropylene and ethylene-propylene-diene rubber and in that the adhesive installation bead is based on a single-component polyurethane polymerising under moisture.

## Patentansprüche

1. Glasscheibe (1), bestimmt zur Montage und Demontage in einer Fensteröffnung, insbesondere Autoglasscheibe, mit einem Umfangsrahmen (4; 16, 30) aus Elastomer mit einer zum Aufnehmen eines an einem Befestigungsflansch (2) der Fensteröffnung hafenden und nach dem Einbau der Glasscheibe (1) aushärtenden Montagekleberstrangs (13; 25; 37) bestimmten Rinne, die mindestens einen Vorsprung zum Festhalten des Kleberstrangs hat, wobei die Verbindung zwischen dem Elastomerrahmen und dem Kleberstrang durch mechanischen Formschluß sichergestellt ist und das Material des Kleberstrangs (13; 25; 37) nicht an dem des Umfangsrahmens (4; 16, 30) haftet, **dadurch gekennzeichnet**, daß die Rinne aufgeweitet ist und daß die Materialien des Umfangsrahmens (4; 16, 30) und des Montageklebers (13; 25; 37) so beschaffen sind, daß der Montagekleberstrang nach seinem Aushärten zerstörungsfrei herausgezogen werden kann.

2. Glasscheibe nach Anspruch 1, **dadurch gekennzeichnet**, daß die Rinne des Rahmens mindestens einen Vorsprung (10; 23, 24; 33, 34) nahe seiner Ausmündung hat.

3. Glasscheibe nach Anspruch 2, **dadurch gekennzeichnet**, daß die Tiefe der Rinne unterhalb des Vorsprungs größer als die Dicke des Vorsprungs (10; 23, 24; 33, 34).

4. Glasscheibe nach einem der vorstehenden Ansprüche, **dadurch gekennzeichnet**, daß der Umfangsrahmen (30) mindestens eine Höhlung (36) nahe dem Boden (35) der Rinne umfaßt.

5. Glasscheibe nach einem der vorstehenden Ansprüche, **dadurch gekennzeichnet**, daß der Umfangsrahmen (16) eine über die Umfangsfläche der Glasscheibe hinausragende Lippe (17) besitzt.

6. Vorgerüstete Glasscheibe nach einem der vorstehenden Ansprüche, **dadurch gekennzeichnet**, daß der Umfangsrahmen aus einem thermoplastischen Elastomer und daß der Montagekleberstrang aus einer Reaktivpolymerbasis besteht.

7. Glasscheibe nach Anspruch 6, **dadurch gekennzeichnet**, daß der Umfangsrahmen aus isotaktischem Polypropylen und Ethylen-Propylen-Dien-Kautschuk, und der Montagekleberstrang aus einem feuchtigkeitshärtenden Einkomponenten-Polyurethan-System besteht.
